# EUROPEAN PATENT SPECIFICATION

(11) **EP 3 992 586 B1**
(45) Date of publication and mention of the grant of the patent: **20.03.2024**
(21) Application number: 21176296.8
(22) Date of filing: 27.05.2021
(51) Int. Cl.: G01F 1/075, G01F 1/115, G01F 15/00, G01F 15/12, E03C 1/00, B01D 35/02, C02F 1/00, E03B 7/07, F04B 13/00, F24D 17/00, B01D 35/30, F24D 19/00

(54) **CONNECTOR FOR FILTERING DEVICES FOR PLUMBING SYSTEMS**
VERBINDER FÜR FILTERVORRICHTUNGEN FÜR SANITÄRSYSTEME
CONNECTEUR POUR DISPOSITIFS DE FILTRAGE POUR SYSTÈMES DE TUYAUTERIE

(30) Priority: 27.10.2020 IT 202000025381
(43) Date of publication of application: 04.05.2022
(73) Proprietor: ACQUA BREVETTI S.R.L., 35035 Mestrino (PD) (IT)
(72) Inventor: BARBIERI, Graziano, 35035 MESTRINO PD (IT)
(74) Representative: Modiano, Micaela Nadia

(56) References cited:
- EP-A1- 2 098 835
- EP-A1- 2 154 490
- EP-A1- 3 214 307
- EP-A2- 1 832 746
- IT-A1- PD20 100 051
- IT-A1- PD20 110 240
- KR-B1- 101 987 470
- US-A- 3 549 048

## Description

The present invention relates to a connector for filtering devices for plumbing systems.

EP 2 098 835 A1, KR 101 987 470 B1, EP 2 154 490 A1 disclose connectors for filtering devices for plumbing systems.

Nowadays, devices are known and widespread which are adapted to measure, proportionally, small quantities of liquids in order to introduce them into a plumbing system, for example an apparatus for the production of hot water.

It is known that heating apparatuses, and in particular those for the production of domestic hot water, are subject to the risk of encrustations and corrosion owing to the presence of the calcium and magnesium salts, which are naturally present in the water and which can precipitate inside the piping of the apparatus.

For this reason it is usual to introduce substances into the plumbing systems that are adapted to obtain the suspension of the calcium and magnesium salts, preventing their precipitation with heating.

Nowadays, electronic dosing pumps are known and widespread. Adapted to be interposed between portions of piping of a plumbing system, these have an impeller with vanes which is moved by the passage of the fluid through the plumbing system.

Electronic dosing pumps interact with electronic means for measuring the passing fluid.

Such electronic measurement means are normally constituted by an electronic meter for reading pulses generated by the rotation of the impeller, and these means are connected to means for actuation of the pumping means, which send the anti-limescale/descaling substance into the apparatus, according to the measurement of the pulses and therefore according to the quantity of circulating fluid.

Such electronic dosing pumps are generally installed in plumbing systems that also have a filtering device for filtering the dirt and impurities present in the circulating fluid.

Such known art has a number of aspects that can be improved.

First of all, the installation technician has to decide in advance whether or not to install an electronic dosage pump and its associated electronic means for measuring the quantity of passing fluid, and if the technician decides to install it at another time, it will be necessary to modify the existing plumbing system in order to install such elements.

Furthermore, normally the electronic dosage pump, its associated electronic means for measuring the quantity of passing fluid, and the filtering device are separate elements of the system and this leads to a considerable implementation complexity of the system.

Also, if it is necessary to install means for measuring the flow in the plumbing system that are independent of any electronic dosage pump, these means should be installed apart and separately from the filtering device and any electronic dosage pump.

This leads to the need to add an additional element to the system, with an increase in the components and of the overall cost.

The aim of the present invention is to provide a connector for a filtering device for plumbing systems which is capable of improving the known art in one or more of the above mentioned aspects.

Within this aim, an object of the invention is to provide a connector for a filtering device for plumbing systems that enables an installation technician to add an electronic dosage pump to the plumbing system optionally at another time without needing to modify the existing system and without needing to install a pulse-reading meter.

Another object of the invention is to provide a connector for a filtering device for plumbing systems that integrates within it means for measuring flow in the plumbing system.

Another object of the invention is to provide a connector for a filtering device for plumbing systems that allows the disinfection of the filtering device.

A further object of the present invention is to overcome the drawbacks of the background art in a manner that is alternative to any existing solutions.

Another object of the invention is to provide a connector for a filtering device for plumbing systems that is highly reliable, easy to implement and of low cost.

This aim and these and other objects which will become better apparent hereinafter are achieved by a connector for a filtering device for plumbing systems, which comprises a hollow body which has an inlet and an outlet and is adapted to be interposed between portions of piping of a plumbing system, and is provided internally with an impeller, which rotates as an effect of a passing fluid, the connector further comprises electronic means for measuring the quantity of said passing fluid. Said electronic means comprise an encoder which interacts with said impeller and said hollow body is configured to be fluidically connected to a pump by way of a duct for the introduction of substances.

Further characteristics and advantages of the invention will become better apparent from the detailed description that follows of a preferred, but not exclusive, embodiment of the connector for a filtering device for plumbing systems according to the invention, which is illustrated for the purposes of non-limiting example in the accompanying drawings wherein:

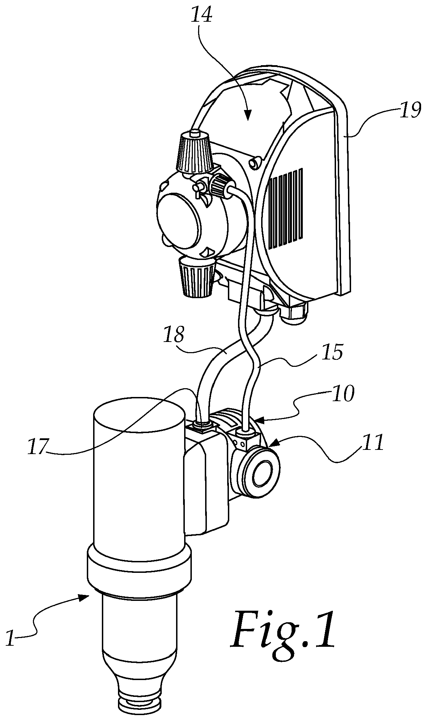

- Figure 1 is an overall perspective view of a connector for a filtering device for plumbing systems, according to the invention, in an application thereof;

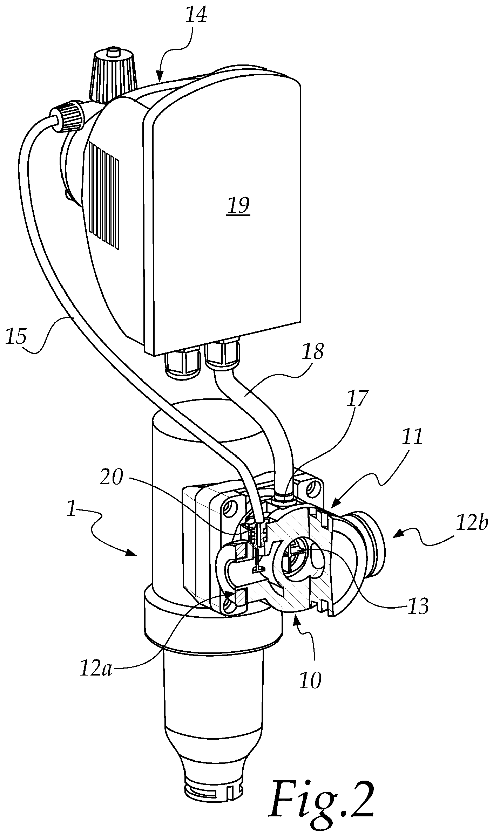

- Figure 2 is a first partially cutaway view of the connector for a filtering device for plumbing systems, of Figure 1;

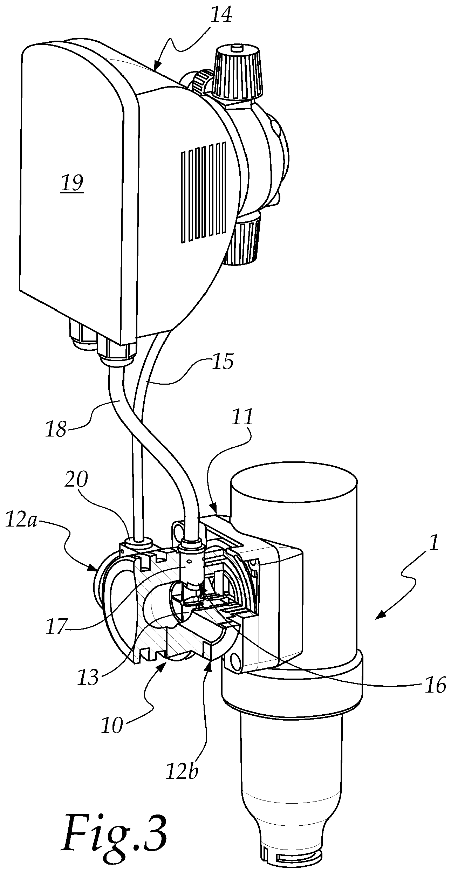

- Figure 3 is a second partially cutaway view of the connector for a filtering device for plumbing systems, of Figure 1;
- Figure 4 is a cross-sectional view of a connector according to the invention in a particular application of use thereof.

With reference to the figures, a connector for a filtering device for plumbing systems according to the invention is generally designated by the reference numeral 10.

In the figures, the connector 10 is shown in an embodiment thereof.

In particular, the connector 10 is applied to a portion of a plumbing system, not shown in the figures, at a filtering device 1.

In the description that follows, the term "filter" is used with the same meaning as the expression "filtering device".

The connector 10 comprises a hollow body 11 interposed between portions of piping of a plumbing system, not shown in the figures, and it has an inlet 12a and an outlet 12b.

Such connector 10 is provided internally with an impeller 13, which rotates by virtue of a passing fluid.

The connector 10 is fluidically connected to a dosage pump 14.

In particular, such pump 14 is connected to the hollow body 11 of the connector 10, by way of a duct 15 for the introduction of a substance.

One of the peculiarities of the invention consists in that it comprises electronic means 16 for measuring the quantity of the passing fluid.

Such means 16 comprise an encoder 17, which interacts with the impeller 13 and is connected electrically, via the cable 18, to the electronic board 19 of the pump 14.

The encoder 17 is a Hall effect encoder.

In particular, the duct 15 for the introduction of the substance is fluidically connected to the connector 10 at the inlet 12a via a one-way valve 20.

Such valve 20 is a ball valve.

The hollow body 11 is fluidically connected with the filter 1 and such impeller 13 is fluidically interposed between the connector 12 and the filter 1.

The operation of the connector 10 is the following.

The fluid circulating in the plumbing system enters the hollow body 11 of the connector 10, via the inlet 12a, and makes the impeller 13 move by virtue of its passage.

At the same time, the encoder 17 reads the rotation speed of the impeller 13 and sends an electrical signal to the card 19 of the pump 14, which, on the basis of the signal received, commands the dosage of the substance which is sent, through the duct 15, to the inlet 12a of the connector 12 of the hollow body 11.

As a consequence, according to the requirements, for example according to the use of domestic hot water, different flows of fluid are necessary and, as a consequence, the impeller 13 rotates at different speeds.

As a function of the rotation speed of the impeller 13, the encoder 17 sends a different signal to the pump 14 which doses different quantities of substance, according to the requirements.

It should be noted that the introduction of the substance into the inlet 12a of the connector 10 makes it possible to introduce an anti-limescale/purifier/disinfectant substance both for the fluid circulating in the system and for the filter 1, before the fluid flows out from the hollow body 11 through the outlet 12b of the connector 10 and is reintroduced into the plumbing system.

It should also be noted that, by virtue of the use of electronic reading means 16, it is possible to know at any time the status of the flow and optionally take action to cut it off if necessary.

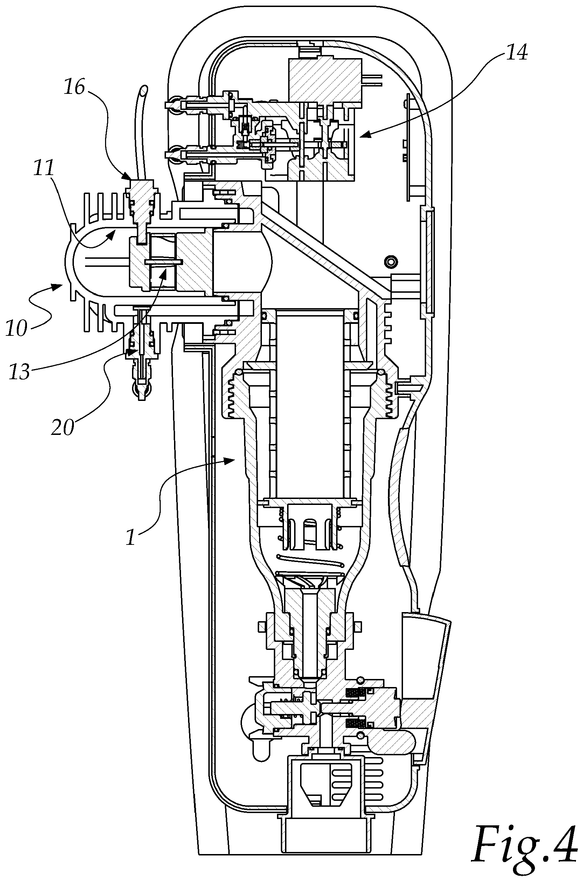

In a particular embodiment, shown in Figure 4, the connector 10 is applied to a portion of a plumbing system, not shown in the figures, at a filter 1.

In the application shown in that figure, the pump 14 is integrated in the filter 1.

In other embodiments, not shown in the figures, the pump 14 is not integrated in the filter 1, but is separate from it.

In practice it has been found that the invention fully achieves the intended aim and objects by providing a connector for a filtering device for plumbing systems that is easier and simpler to provide and install with respect to similar conventional devices.

With the invention a connector has been provided for filtering devices for plumbing systems that enables an installation technician to add an electronic dosage pump to a plumbing system optionally at another time without needing to modify the existing system and without needing to install electronic means for measuring the quantity of passing fluid.

It should be noted that, with the invention a connector for a filtering device for plumbing systems has been provided that integrates within it means for measuring flow in the plumbing system.

In addition, with the invention a connector for a filtering device for plumbing systems has been provided that allows the disinfection of the filtering device.

The invention thus conceived is susceptible of numerous modifications and variations, all of which are within the scope of the appended claims.

In practice the materials employed, provided they are compatible with the specific use, and the contingent dimensions and shapes, may be any according to requirements and to the state of the art.

The disclosures in Italian Patent Application No. 102020000025381 are the disclosures from which this application claims priority.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connector (10) for a filtering device for plumbing systems, which comprises a hollow body (11) which has an inlet (12a) and an outlet (12b) and is adapted to be interposed between portions of piping of a plumbing system, and is provided internally with an impeller (13), which rotates as an effect of a passing fluid, the connector (10) further comprising electronic means (16) for measuring the quantity of said passing fluid, said electronic means (16) comprising an encoder (17) which interacts with said impeller (13), **characterized in that** said hollow body (11) is configured to be fluidically connected to a pump (14) by way of a duct (15) for the introduction of substances.

2. The connector (10) according to claim 1, **characterized in that** said encoder (17) is a Hall effect encoder.

3. The connector (10) according to one or more of the preceding claims, **characterized in that** said duct (15) is fluidically connected to said hollow body (11) at said inlet (12a) by way of a one-way valve (20).

4. The connector (10) according to claim 3, **characterized in that** said valve (20) is a ball valve.

5. The connector (10) according to one or more of the preceding claims, **characterized in that** said hollow body (11) is adapted to be fluidically connected with a filter (1) and said impeller (13) is adapted to be fluidically interposed between said connector (12) and said filter (1).

6. The connector (10) according to one or more of the preceding claims, **characterized in that** said pump (14) is integrated in said filter (1).

## Patentansprüche

1. Ein Verbinder (10) für eine Filtervorrichtung für Sanitärsysteme, der einen Hohlkörper (11) umfasst, welcher einen Einlass (12a) und einen Auslass (12b) hat und ausgebildet ist, um zwischen Rohrabschnitten eines Sanitärsystems angeordnet zu werden, und innen mit einem Flügelrad (13) ausgestattet ist, das sich als Effekt eines durchströmenden Fluids dreht; wobei der Verbinder (10) weiter elektronische Mittel (16) zur Messung der Menge des durchströmenden Fluids umfasst, wobei die elektronischen Mittel (16) einen Codierer (17) umfassen, der mit dem Flügelrad (13) zusammenwirkt; **dadurch gekennzeichnet, dass** der Hohlkörper (11) ausgebildet ist, um zum Einlass von Substanzen über eine Leitung (15) fluidisch mit einer Pumpe (14) verbunden zu werden.

2. Der Verbinder (10) gemäß Anspruch 1, **dadurch gekennzeichnet, dass** der Codierer (17) ein Hall-Magnetfeldcodierer ist.

3. Der Verbinder (10) gemäß einem oder mehreren der obigen Ansprüche, **dadurch gekennzeichnet, dass** die Leitung (15) an dem Einlass (12a) über ein Einwegventil (20) fluidisch mit dem Hohlkörper (11) verbunden ist.

4. Der Verbinder (10) gemäß Anspruch 3, **dadurch gekennzeichnet, dass** das Ventil (20) ein Kugelventil ist.

5. Der Verbinder (10) gemäß einem oder mehreren der obigen Ansprüche, **dadurch gekennzeichnet, dass** der Hohlkörper (11) ausgebildet ist, um fluidisch mit einem Filter (1) verbunden zu werden, und das Flügelrad (13) ausgebildet ist, um fluidisch zwischen dem Verbinder (12) und dem Filter (1) angeordnet zu werden.

6. Der Verbinder (10) gemäß einem oder mehreren der obigen Ansprüche, **dadurch gekennzeichnet, dass** die Pumpe (14) in den Filter (1) integriert ist.

## Revendications

1. Connecteur (10) pour un dispositif de filtrage pour des systèmes de plomberie, qui comprend un corps creux (11) qui comporte un orifice d'entrée (12a) et un orifice de sortie (12b) et est adapté pour être intercalé entre des parties de tuyauterie d'un système de plomberie, et est pourvu intérieurement d'un impulseur (13), qui tourne par l'effet du passage d'un fluide, le connecteur (10) comprenant en outre des moyens électroniques (16) pour mesurer la quantité dudit fluide passant, lesdits moyens électroniques (16) comprenant un encodeur (17) qui interagit avec ledit impulseur (13), **caractérisé en ce que** ledit corps creux (11) est configuré pour connecté fluidiquement à une pompe (14) au moyen d'un conduit (15) pour l'introduction de substances.

2. Connecteur (10) selon la revendication 1, **caractérisé en ce que** ledit encodeur (17) est un encodeur à effet Hall.

3. Connecteur (10) selon une ou plusieurs des revendications précédentes, **caractérisé en ce que** ledit conduit (15) est connecté fluidiquement audit corps creux (11) au niveau dudit orifice d'entrée (12a) au moyen d'un clapet anti-retour (20).

4. Connecteur (10) selon la revendication 3, **caractérisé en ce que** ledit clapet (20) est un clapet à bille.

5. Connecteur (10) selon une ou plusieurs des revendications précédentes, **caractérisé en ce que** ledit corps creux (11) est adapté pour être connecté fluidiquement à un filtre (1) et ledit impulseur (13) est adapté pour être intercalé fluidiquement entre ledit connecteur (12) et ledit filtre (1).

6. Connecteur (10) selon une ou plusieurs des revendications précédentes, **caractérisé en ce que** ladite pompe (14) est intégrée dans ledit filtre (1).
